(19)

Europäisches Patentamt

European Patent Office

Office européen des brevets

(11) **EP 4 530 969 A1**

(12) **EUROPEAN PATENT APPLICATION**

(43) Date of publication:
02.04.2025 Bulletin 2025/14

(21) Application number: 24201162.5

(22) Date of filing: 18.09.2024

(51) International Patent Classification (IPC):
*G06T 5/50* (2006.01)     *G06T 5/73* (2024.01)

(52) Cooperative Patent Classification (CPC):
**G06T 5/50; G06T 5/73;** G06T 2207/10081;
G06T 2207/10116; G06T 2207/20224;
G06T 2207/30004

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH MA MD TN**

(30) Priority: 21.09.2023 JP 2023156407

(71) Applicant: FUJI-FILM Corporation
Minato-ku
Tokyo 106-8620 (JP)

(72) Inventor: TAKAHASHI, Tomoyuki
Kanagawa (JP)

(74) Representative: Dehns Germany Partnerschaft
mbB
Theresienstraße 6-8
80333 München (DE)

(54) **RADIATION IMAGE PROCESSING DEVICE, RADIATION IMAGE PROCESSING METHOD, AND RADIATION IMAGE PROCESSING PROGRAM**

(57)     A processor acquires a first radiation image and a second radiation image which are acquired by imaging a subject, based on radiation having different energy distributions, performs sharpness conversion processing on at least one of the first radiation image or the second radiation image to make sharpness of the first radiation image and the second radiation image uniform, and derives a component image in which a specific component in the subject is emphasized, based on the first radiation image and the second radiation image which are subjected to the sharpness conversion processing.

## FIG. 3

RADIATION IMAGE
PROCESSING DEVICE — 10

IMAGE ACQUISITION UNIT — 20

FILTER DERIVATION UNIT — 21

SHARPNESS
CONVERSION UNIT — 22

IMAGE DERIVATION UNIT — 23

EP 4 530 969 A1

**Description**

BACKGROUND

Technical Field

The present disclosure relates to a radiation image processing device, a radiation image processing method, and a radiation image processing program.

Related Art

In the related art, energy subtraction processing using two radiation images obtained by irradiating a subject with two types of radiation having different energy distributions by using the fact that an attenuation amount of the transmitted radiation differs depending on the substance constituting the subject has been known. The energy subtraction processing is a method in which respective pixels of the two radiation images obtained as described above are associated with each other, and subtraction is performed after multiplying an appropriate weight coefficient between pixels to acquire an image in which a specific structure is extracted. In a case in which such energy subtraction processing is performed to derive a soft part image obtained by extracting a soft part from, for example, a radiation image acquired by imaging a chest, it is possible to observe shadows that appear in the soft part without being disturbed by a bone part. On the contrary, in a case in which a bone part image obtained by extracting the bone part is derived, it is possible to observe shadows that appear in the bone part without being disturbed by the soft part.

A one-shot method and a two-shot method are known as an imaging method for performing the energy subtraction processing (hereinafter, referred to as energy subtraction imaging). The one-shot method is a method in which two radiation detectors that detect radiation to acquire radiation images are stacked with a radiation energy conversion filter interposed therebetween, and the two radiation detectors which are stacked are irradiated with radiation transmitted through the subject at the same time, and thus the two radiation detectors are irradiated with the radiation having different energy distributions. The two-shot method is a method which performs imaging twice using two types of radiation having different energy distributions.

Meanwhile, various methods for improving an image quality of the image acquired by the energy subtraction processing have been proposed. For example, JP2002-359781A proposes a method of performing energy subtraction processing after matching contrasts of two radiation images with each other, which are acquired by energy subtraction imaging. In addition, JP2022-026929A proposes a method of performing granulation suppression processing by deriving, based on a processing content of the granulation suppression processing for a radiation image having higher S/N of two radiation images acquired by energy subtraction imaging, a processing content of the granulation suppression processing for the other radiation image.

In the one-shot method of the energy subtraction imaging, the radiation transmitted through the subject is simultaneously applied to two radiation detectors which are stacked with a radiation energy conversion filter interposed therebetween. Therefore, energy of the radiation applied to the radiation detector on a side away from a radiation source is relatively high since a low-energy component thereof is more attenuated than that of the radiation applied to the radiation detector on a side close to the radiation source. Therefore, in a case of performing the one-shot method, in order to improve detection efficiency of radiation having different energies, radiation detectors having different radiation detection characteristics are used on the side close to the radiation source and on the side far from the radiation source.

However, in a case in which the radiation detection characteristics differ between the two radiation detectors, sharpness of the two radiation images acquired by the energy subtraction imaging may differ from each other. In a case in which the sharpness of the two radiation images is different from each other in this way, an artifact caused by a difference in sharpness is superimposed on a component image in which a specific component of the subject is emphasized, such as a difference image acquired by the energy subtraction processing.

SUMMARY OF THE INVENTION

The present disclosure has been made in view of the above circumstances, and an object of the present disclosure is to suppress an artifact caused by a difference in sharpness in a component image in which a specific component of a subject is emphasized.

The present disclosure relates to a radiation image processing device comprising at least one processor, in which the processor acquires a first radiation image and a second radiation image which are acquired by imaging a subject, based on radiation having different energy distributions, performs sharpness conversion processing on at least one of the first radiation image or the second radiation image to make sharpness of the first radiation image and the second radiation image uniform, and derives a component image in which a specific component in the subject is emphasized, based on the first radiation image and the second radiation image which are subjected to the sharpness conversion processing.

Note that, in the radiation image processing device according to the present disclosure, the processor may derive a sharpness conversion filter based on a difference between a characteristic of the sharpness of the first radiation image and a characteristic of the sharpness of the second radiation image, and may perform the sharpness conversion processing with the sharpness conversion filter.

In addition, in the radiation image processing device according to the present disclosure, the processor may perform the sharpness conversion processing to match the sharpness of one of the first radiation image and the second radiation image with the sharpness of the other of the first radiation image and the second radiation image.

In addition, in the radiation image processing device according to the present disclosure, the processor may perform the sharpness conversion processing to match the sharpness of the first radiation image and the sharpness of the second radiation image with specific sharpness.

In addition, in the radiation image processing device according to the present disclosure, the processor may derive the component image by performing weighting subtraction on the first radiation image and the second radiation image which are subjected to the sharpness conversion processing.

In addition, in the radiation image processing device according to the present disclosure, the first radiation image and the second radiation image may be acquired by one-shot energy subtraction imaging using two radiation detectors having characteristics in which sharpness in acquired radiation images is different.

The present disclosure relates to a radiation image processing method comprising, via a computer, acquiring a first radiation image and a second radiation image which are acquired by imaging a subject, based on radiation having different energy distributions, performing sharpness conversion processing on at least one of the first radiation image or the second radiation image to make sharpness of the first radiation image and the second radiation image uniform, and deriving a component image in which a specific component in the subject is emphasized, based on the first radiation image and the second radiation image which are subjected to the sharpness conversion processing.

The present disclosure relates to a radiation image processing program causing a computer to execute a procedure of acquiring a first radiation image and a second radiation image which are acquired by imaging a subject, based on radiation having different energy distributions, a procedure of performing sharpness conversion processing on at least one of the first radiation image or the second radiation image to make sharpness of the first radiation image and the second radiation image uniform, and a procedure of deriving a component image in which a specific component in the subject is emphasized, based on the first radiation image and the second radiation image which are subjected to the sharpness conversion processing; as well as a computer-readable storage medium storing said program.

According to the present disclosure, it is possible to suppress an artifact caused by a difference in sharpness in a component image in which a specific component in a subject is emphasized.

BRIEF DESCRIPTION OF THE DRAWINGS

Fig. 1 is a schematic configuration diagram of a radiography system to which a radiation image processing device according to an embodiment of the present disclosure is applied.

Fig. 2 is a diagram showing a schematic configuration of the radiation image processing device according to the present embodiment.

Fig. 3 is a diagram showing a functional configuration of the radiation image processing device according to the present embodiment.

Fig. 4 is a diagram for describing a difference between sharpness of a first radiation image G1 and sharpness of a second radiation image G2.

Fig. 5 is a diagram showing MTF characteristics of first and second radiation detectors.

Fig. 6 is a flowchart showing processing performed in the present embodiment.

Fig. 7 is a conceptual diagram of the processing performed in the present embodiment.

DETAILED DESCRIPTION

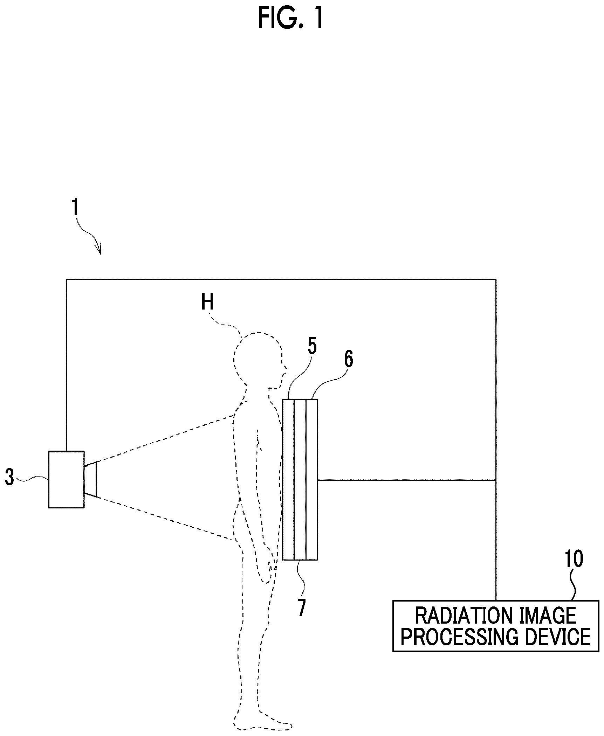

In the following description, embodiments of the present disclosure will be described with reference to the drawings. Fig. 1 is a schematic block diagram showing a configuration of a radiography system to which a radiation image processing device according to an embodiment of the present disclosure is applied. As shown in Fig. 1, the radiography system according to the present embodiment comprises an imaging apparatus 1 and a radiation image processing device 10 according to the present embodiment.

The imaging apparatus 1 is an imaging apparatus for performing energy subtraction imaging by a so-called one-shot method for changing energy of each of radiation, such as X-rays, emitted from a radiation source 3 and transmitted through a subject H and irradiating a first radiation detector 5 and a second radiation detector 6 with the converted radiation. During the imaging, as shown in Fig. 1, the first radiation detector 5, a radiation energy conversion filter 7 made of a copper plate or the like, and the second radiation detector 6 are disposed in order from a side closest to the radiation source 3, and the radiation source 3 is driven. Note that the first and second radiation detectors 5 and 6 are closely attached to the radiation energy conversion filter 7.

As a result, in the first radiation detector 5, a first radiation image G1 of the subject H by low-energy radiation also including so-called soft rays is acquired. In addition, in the second radiation detector 6, a second radiation image G2 of the subject H by high-energy radiation from which the soft rays are removed is acquired. The first and second radiation images G1 and G2 are input to the radiation image processing device 10. The first radiation image G1 and the second radiation image G2 are, for example, front images including the chest and abdomen of the subject H.

The first and second radiation detectors 5 and 6 can perform recording and reading-out of the radiation image repeatedly. A so-called direct-type radiation detector that directly receives emission of the radiation and generates an electric charge may be used, or a so-called indirect-type radiation detector that converts the radiation into visible light and then converts the visible light into an electric charge signal may be used. In addition, as a method for reading out a radiation image signal, it is desirable to use a so-called thin film transistor (TFT) readout method in which the radiation image signal is read out by turning a TFT switch on and off, or a so-called optical readout method in which the radiation image signal is read out by emission of read out light. However, other methods may also be used without being limited to these methods.

In the present embodiment, radiation detection characteristics of the first and second radiation detectors 5 and 6 are different from each other in order to improve detection efficiency of radiation having different energies. For example, CsI (cesium iodide) having good absorption of low-energy components is used as a scintillator of the first radiation detector 5 on a side close to the radiation source 3. On the other hand, GOS ($Gd_2O_2S$: Tb) having good absorption of high-energy components is used as a scintillator of the second radiation detector 6 on a side far from the radiation source 3.

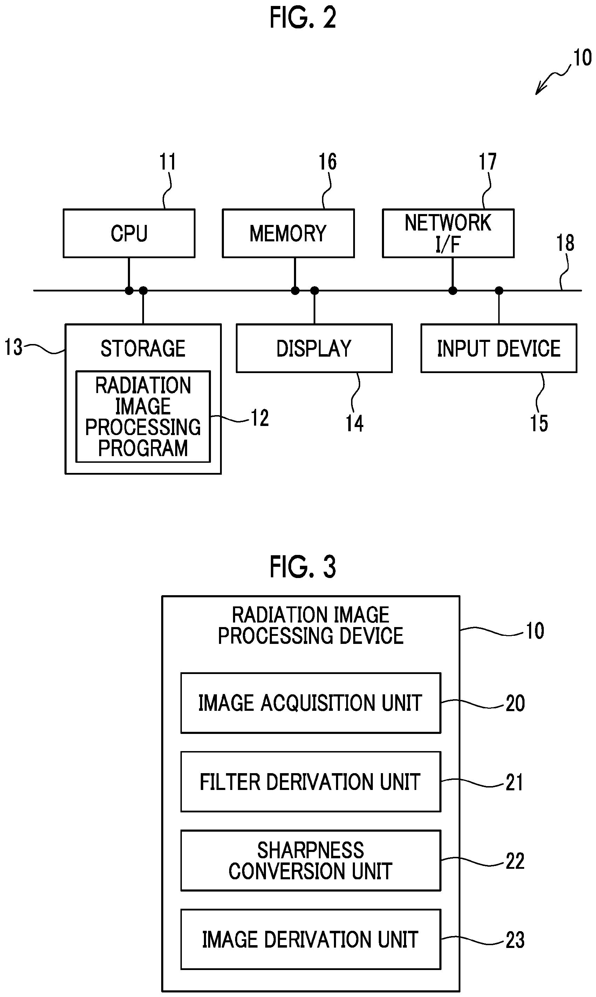

Hereinafter, the radiation image processing device according to the present embodiment will be described. First, with reference to Fig. 2, a hardware configuration of the radiation image processing device according to the present embodiment will be described. As shown in Fig. 2, the radiation image processing device 10 is a computer, such as a workstation, a server computer, and a personal computer, and comprises a central processing unit (CPU) 11, a non-volatile storage 13, and a memory 16 as a transitory storage region. In addition, the radiation image processing device 10 comprises a display 14, such as a liquid crystal display, an input device 15, such as a keyboard and a mouse, and a network interface (I/F) 17 connected to a network. The CPU 11, the storage 13, the display 14, the input device 15, the memory 16, and the network I/F 17 are connected to a bus 18. Note that the CPU 11 is an example of a processor according to the present disclosure.

The storage 13 is realized by a hard disk drive (HDD), a solid state drive (SSD), a flash memory, and the like. A radiation image processing program 12 installed in the radiation image processing device 10 is stored in the storage 13 as a storage medium. The CPU 11 reads out the radiation image processing program 12 from the storage 13, expands the read out radiation image processing program 12 to the memory 16, and executes the expanded radiation image processing program 12.

Note that the radiation image processing program 12 is stored in a storage device of the server computer connected to the network or in a network storage in a state of being accessible from the outside, and is downloaded and installed in the computer that configures the radiation image processing device 10 in response to the request. Alternatively, the radiation image processing program 12 is distributed in a state of being recorded on a recording medium, such as a digital versatile disc (DVD) or a compact disc read only memory (CD-ROM), and is installed in the computer that configures the radiation image processing device 10 from the recording medium.

Next, a functional configuration of the radiation image processing device according to the present embodiment will be described. Fig. 3 is a diagram showing the functional configuration of the radiation image processing device according to the present embodiment. As shown in Fig. 3, the radiation image processing device 10 comprises an image acquisition unit 20, a filter derivation unit 21, a sharpness conversion unit 22, and an image derivation unit 23. Moreover, the CPU 11 executes a radiation image processing program 12, so that the CPU 11 functions as the image acquisition unit 20, the filter derivation unit 21, the sharpness conversion unit 22, and the image derivation unit 23.

The image acquisition unit 20 acquires the first radiation image G1 and the second radiation image G2, which are the front images of the subject H, from the first and second radiation detectors 5 and 6 by causing the imaging apparatus 1 to perform imaging of the subject H. In a case in which the first radiation image G1 and the second radiation image G2 are acquired, imaging conditions, such as an irradiation dose of radiation, a tube voltage, and a source-to-image receptor distance (SID), are set. The set imaging conditions are stored in the storage 13.

Note that the first and second radiation images G1 and G2 may be acquired by a program different from the radiation image processing program according to the present embodiment. In this case, the first and second radiation images G1 and G2 are stored in the storage 13, and the image acquisition unit 20 reads out the first and second radiation images G1 and G2 stored in the storage 13 from the storage 13 for processing.

The filter derivation unit 21 derives a sharpness conversion filter used in a case in which the sharpness conversion unit 22 performs sharpness conversion processing on at least one of the first radiation image G1 or the second radiation image G2. As described above, in the present embodiment, the radiation detection characteristics are different between the first radiation detector 5 and the second radiation detector 6. In a case in which the radiation detection characteristics are different between the first radiation detector 5 and the second radiation detector 6, the sharpness is different between the first radiation image G1 and the second radiation image G2. The difference in radiation detection characteristics is caused by, for example, a difference in a film forming state of the scintillator. For example, CsI used as the scintillator of the first radiation detector 5 consists of fiber-shaped thin columnar crystals independent of each other. On the other hand, GOS used as the scintillator of the second radiation detector 6 does not consist of columnar crystals. As a result, CsI has higher modulation transfer function (MTF) characteristics than GOS, and thus the sharpness of the first radiation image G1 is higher than the sharpness of the second radiation image.

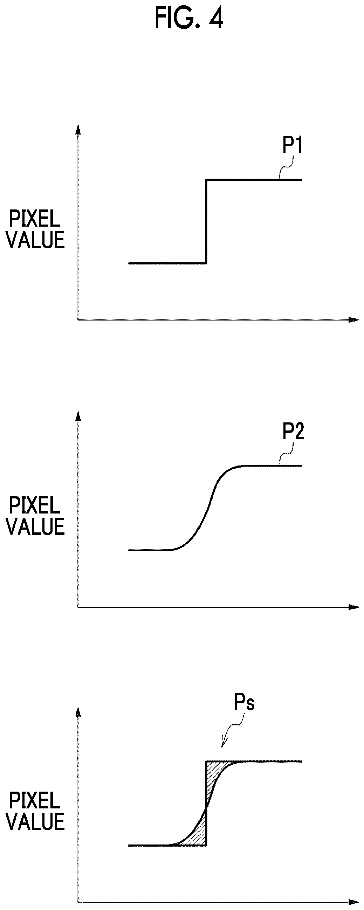

Fig. 4 is a diagram for describing a difference between sharpness of a first radiation image G1 and sharpness of a second radiation image G2. Fig. 4 shows, from the top, a profile P1 of pixel values at an edge portion of the subject in the first radiation image G1, a profile P2 of pixel values at an edge portion of the subject in the second radiation image G2, and a profile Ps describing the difference between the first and second radiation images G1 and G2. In addition, in Fig. 4, the horizontal axis indicates the position, and the vertical axis indicates the pixel value. As shown in Fig. 4, in the profile P1 of the first radiation image G1, the density change at the edge portion is steep. On the other hand, since the sharpness of the second radiation image G2 is lower than the sharpness of the first radiation image G1, in the profile P2 of the second radiation image G2, the density change at the edge portion is gentle as compared with that in the profile P1 of the first radiation image G1.

Therefore, in a case in which the first radiation image G1 and the second radiation image G2 are subjected to weighting subtraction to derive a difference image as described below, as shown in the profile Ps of the difference image of Fig. 4, pixel values of a hatched portion are superimposed on the difference image as artifacts.

The filter derivation unit 21 derives a sharpness conversion filter for performing the sharpness conversion processing so that the sharpness of the first radiation image G1 and the sharpness of the second radiation image G2 match with each other. For this reason, the filter derivation unit 21 acquires the MTF characteristics of the first radiation detector 5 and the second radiation detector 6. The MTF characteristic may be measured in advance by a well-known method such as imaging an MTF chart.

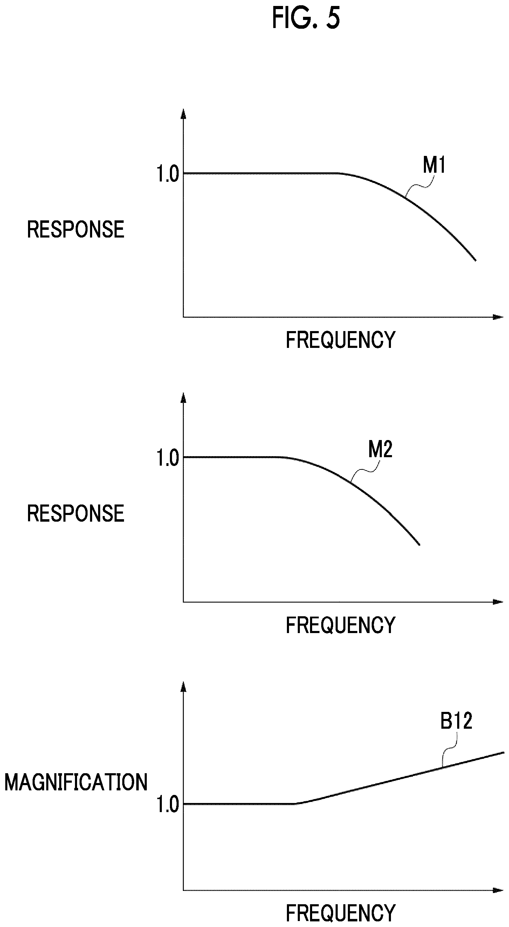

Fig. 5 is a diagram showing the MTF characteristics of the first and second radiation detectors 5 and 6. As shown in Fig. 5, an MTF characteristic M2 of the second radiation detector 6 has a lower response to a high-frequency component than an MTF characteristic M1 of the first radiation detector 5. The filter derivation unit 21 derives a conversion magnification B12 for converting the MTF characteristic M2 into the MTF characteristic M1 by dividing the MTF characteristic M1 by the MTF characteristic M2. Then, the filter derivation unit 21 derives the sharpness conversion filter for matching the sharpness of the second radiation image G2 and the sharpness of the first radiation image G1 with each other based on the conversion magnification B12. Note that the filter derivation unit 21 may derive a sharpness conversion filter F0 in advance and store the sharpness conversion filter F0 in the storage 13.

Hereinafter, the derivation of the sharpness conversion filter F0 will be described. A filter coefficient of the sharpness conversion filter F0 can be obtained by deriving an impulse response by performing a discrete Fourier transform (DFT) on a desired frequency characteristic. First, the desired frequency characteristic, that is, a frequency characteristic in the image after the filtering processing via the sharpness conversion filter F0, is determined. The frequency characteristic is determined based on the amplitude characteristic and the phase characteristic. In the present embodiment, the frequency characteristic is the frequency characteristic of the first radiation image G1, and the amplitude characteristic is the above-mentioned conversion magnification B12. Note that the phase characteristic is predetermined.

In a case of deriving the sharpness conversion filter F0, the conversion magnification is defined from 0 to a Nyquist frequency Fs/2. Fs is a maximum frequency at which the image can be reproduced. Therefore, the conversion magnification B12 is applied from 0 to the Nyquist frequency Fs/2 on a frequency axis in the frequency characteristic, and the characteristics from 0 to the Nyquist frequency Fs/2 are applied by being reversed left and right from the Nyquist frequency Fs/2 to Fs.

Here, in a case in which the amplitude characteristic is denoted by G(f) and the phase characteristic is denoted by 0(f), the desired frequency characteristic H(f) is derived by Expression (1).

$$H(f) = G(f) \, e^{j\theta(f)} \qquad (1)$$

Then, Expression (1) is discretized to derive Expression (2).

$$H[k] = G[k] \, e^{j\theta[k]} \qquad (2)$$

The inverse DFT is performed on Expression (2) to derive an impulse response h[n] shown in Expression (3). In Expression (3), n is the number of samples.

$$h[n] = (1/N) \sum_{k=0}^{N-1} H[k] \, e^{j2\pi nk/N} \quad (3)$$

An impulse response h[k] for each of k in Expression (3) is the filter coefficient of the sharpness conversion filter F0. The larger the size of the filter, the more the image can be converted to approximate the desired frequency characteristic, but the calculation time increases. Therefore, the filter size may be determined in consideration of the calculation time. For example, the number of taps of the filter can be set to about 17 to 25. Note that the sharpness conversion filter F0 is a one-dimensional filter, but may be a two-dimensional filter.

The sharpness conversion unit 22 performs the filtering processing on the second radiation image G2 with the sharpness conversion filter F0 derived by the filter derivation unit 21 to derive a second radiation image G2' subjected to the sharpness conversion processing. Here, since the sharpness conversion filter F0 is a one-dimensional filter, the sharpness conversion unit 22 first performs the filtering processing in one direction (for example, x direction) in the second radiation image G2 and then performs the filtering processing in a direction (for example, y direction) orthogonal to the one direction.

The image derivation unit 23 derives a component image in which a specific component in the subject H is emphasized, based on the first radiation image G1 and the second radiation image G2' which is subjected to processing. Specifically, as shown in Expression (4) and Expression (5), weighting subtraction is performed between the corresponding pixels of the first and second radiation images G1 and G2, respectively, to derive the bone part image Gb in which the bone part of the subject H included in each of the radiation images G1 and G2 is extracted and the soft part image Gs in which the soft part of the subject H is extracted. The bone part image Gb and the soft part image Gs are examples of a component image. In Expression (4) and Expression (5), $\alpha 1$ and $\alpha 2$ are weighting coefficients, and are set as values capable of extracting the bone tissue and the soft tissue of the subject H included in each of the radiation images G1 and G2 by Expression (4) and Expression (5), respectively, based on the radiation attenuation coefficients of the bone tissue and the soft tissue.

$$Gb(x,y) = G1(x,y) - \alpha 1 \times G2'(x,y) \quad (4)$$

$$Gs(x,y) = G1(x,y) - \alpha 2 \times G2'(x,y) \quad (5)$$

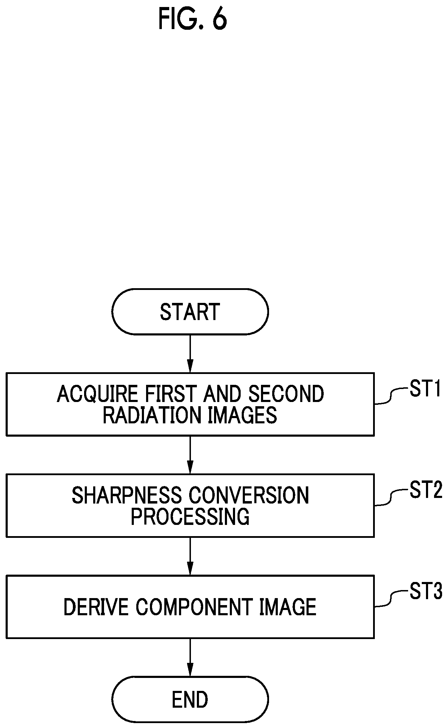

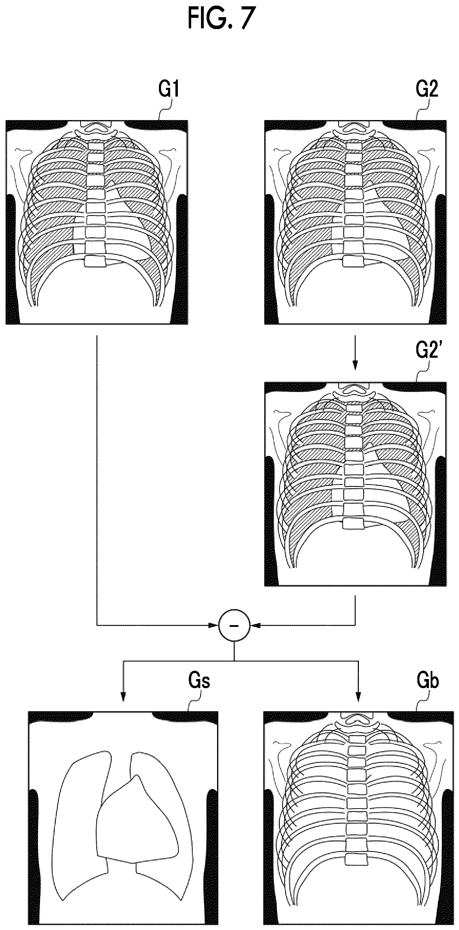

Then, processing performed in the present embodiment will be described. Fig. 6 is a flowchart showing the processing performed in the present embodiment, and Fig. 7 is a conceptual diagram of the processing performed in the present embodiment. Note that the first and second radiation images G1 and G2 are acquired by the imaging and stored in the storage 13. In addition, the sharpness conversion filter F0 is derived by the filter derivation unit 21 and stored in the storage 13.

In a case in which an instruction to start the processing is input from the input device 15, the image acquisition unit 20 acquires the first and second radiation images G1 and G2 from the storage 13 (step ST1). Then, the sharpness conversion unit 22 performs the sharpness conversion processing on the second radiation image G2 (step ST2). Then, the image derivation unit 23 performs the subtraction processing on the first radiation image G1 and the second radiation image G2' which is subjected to the sharpness conversion processing, and derives the component images, that is, the bone part image Gb and the soft part image Gs (step ST3), and the processing is terminated. The bone part image Gb and the soft part image Gs are displayed on the display 14 or are stored in the storage 13.

As described above, in the present embodiment, the sharpness conversion processing is performed on the second radiation image G2 such that the sharpness of the first radiation image G1 and the second radiation image G2 are made uniform, and the component image in which the specific component in the subject H is emphasized is derived, based on the second radiation image G2' subjected to the sharpness conversion processing and the first radiation image G1. Therefore, it is possible to prevent the artifact based on the difference in sharpness between the first radiation image G1 and the second radiation image G2 from being superimposed on the component image, and as a result, it is possible to acquire the component image with high image quality.

In addition, the sharpness conversion filter F0 is derived based on a difference between the characteristic of the sharpness of the first radiation image G1, that is, the MTF characteristic M1, and the characteristic of the sharpness of the second radiation image G2, that is, the MTF characteristic M2, the sharpness conversion processing is performed with the sharpness conversion filter F0. Therefore, with the sharpness conversion processing, the difference in the sharpness between the first radiation image G1 and the second radiation image G2 can be appropriately reduced.

Note that, in the above-described embodiment, the sharpness conversion processing is performed on the second radiation image G2 with the sharpness conversion filter F0. However, the present disclosure is not limited thereto. The sharpness conversion processing may be performed on the first radiation image G1. In this case, the filter derivation unit 21 may divide the MTF characteristic M2 by the MTF characteristic M1 to derive a conversion magnification (referred to as B21) for converting the MTF characteristic M1 into the MTF characteristic M2, and may derive the sharpness conversion filter for making the sharpness of the first radiation image G1 match with the sharpness of the second radiation image G2 based on the conversion magnification B21.

In addition, the sharpness conversion processing may be performed such that the sharpness of each of the first radiation image G1 and the second radiation image G2 is converted into a predetermined specific sharpness. In this case, a sharpness conversion filter F1 for converting the sharpness of the first radiation image G1 into the specific sharpness and a sharpness conversion filter F2 for converting the sharpness of the second radiation image G2 into the specific sharpness are derived by the filter derivation unit 21, respectively. Then, the sharpness conversion processing may be performed on the first radiation image G1 with the sharpness conversion filter F1, and the sharpness conversion processing may be performed on the second radiation image G2 with the sharpness conversion filter F2.

In addition, in the above-described embodiment, the radiation image processing device 10 according to the present embodiment comprises the filter derivation unit 21, but the present disclosure is not limited thereto. The radiation image processing device 10 according to the present embodiment may not comprise the filter derivation unit 21, and a sharpness conversion filter may be derived by a device different from the radiation image processing device 10 according to the present embodiment.

In addition, in the above-described embodiment, the sharpness conversion processing is performed with the filtering processing. However, the present disclosure is not limited thereto. A function, such as a mathematical expression for performing the sharpness conversion processing, may be derived, and the sharpness conversion processing may be performed on at least one of the first radiation image G1 or the second radiation image G2 using the derived function.

In addition, in the above-described embodiment, the component image is derived by the subtraction processing. However, the present disclosure is not limited thereto. In a case in which the component image in which the component of the characteristic of the subject is emphasized can be derived by using the first and second radiation images G1 and G2, a method other than the subtraction processing may be used.

Further, in the above-described embodiment, the first and second radiation images G1 and G2 are acquired by the one-shot method. However, the first and second radiation images G1 and G2 may be acquired by a so-called two-shot method that performs imaging twice.

In the case of the two-shot method, the dose of radiation in a second imaging is lower than the dose of radiation in a first imaging in order to reduce the dose of exposure to the subject H. Therefore, of the first and second radiation images G1 and G2, one radiation image (here, the second radiation image G2) has lower sharpness than that of the other radiation image (here, the first radiation image G1). Therefore, even in a case in which the first and second radiation images G1 and G2 are acquired by the two-shot method, the sharpness conversion processing may be performed on the second radiation image G2 and the subtraction processing may be performed by using the second radiation image G2' subjected to the processing and the first radiation image G1 as in the above-described embodiment.

Further, in the above-described embodiment, the energy subtraction processing is performed using the radiation images acquired by the system that captures the radiation images of the subject H using the first and second radiation detectors 5 and 6. However, the present disclosure may also be applied to a case in which the first and second radiation images G1 and G2 are acquired using an accumulative phosphor sheet instead of the radiation detectors. In this case, the first and second radiation images G1 and G2 need only be acquired by stacking two accumulative phosphor sheets, emitting the radiation transmitted through the subject H, accumulating and recording radiation image information of the subject H in each of the accumulative phosphor sheets, and photoelectrically reading the radiation image information from each of the accumulative phosphor sheets. Note that the two-shot method may also be used in a case in which the first and second radiation images G1 and G2 are acquired by using the accumulative phosphor sheet.

In addition, the radiation in the above-described embodiment is not particularly limited, and $\alpha$-rays or $\gamma$-rays can be applied in addition to X-rays.

In addition, in the embodiment described above, various processors shown below can be used as the hardware structure of processing units that execute various types of processing, such as the image acquisition unit 20, the filter derivation unit 21, the sharpness conversion unit 22, and the image derivation unit 23. As described above, the various processors include, in addition to the CPU that is a general-purpose processor which executes software (program) and functions as various processing units, a programmable logic device (PLD) that is a processor whose circuit configuration can be changed after manufacture, such as a field programmable gate array (FPGA), and a dedicated electrical circuit that is a processor having a circuit configuration which is designed for exclusive use in order to execute specific processing, such as an application specific integrated circuit (ASIC).

One processing unit may be configured by one of these various processors, or may be configured by a combination of two or more processors of the same type or different types (for example, a combination of a plurality of FPGAs or a combination of the CPU and the FPGA). In addition, a plurality of the processing units may be configured by one processor.

As an example of configuring the plurality of processing units by one processor, first, as represented by a computer of a client, a server, and the like there is an aspect in which one processor is configured by a combination of one or more CPUs and software and this processor functions as a plurality of processing units. Second, as represented by a system on chip (SoC) or the like, there is an aspect of using a processor that realizes the function of the entire system including the plurality of processing units by one integrated circuit (IC) chip. In this way, as the hardware structure, the various processing units are configured by using one or more of the various processors described above.

Further, as the hardware structures of these various processors, more specifically, it is possible to use an electrical circuit (circuitry) in which circuit elements, such as semiconductor elements, are combined.

The supplementary notes of the present disclosure will be described below.

Supplementary Note 1

A radiation image processing device comprising at least one processor, in which the processor acquires a first radiation image and a second radiation image which are acquired by imaging a subject, based on radiation having different energy distributions, performs sharpness conversion processing on at least one of the first radiation image or the second radiation image to make sharpness of the first radiation image and the second radiation image uniform, and derives a component image in which a specific component in the subject is emphasized, based on the first radiation image and the second radiation image which are subjected to the sharpness conversion processing.

Supplementary Note 2

The radiation image processing device according to Supplementary Note 1, in which the processor derives a sharpness conversion filter based on a difference between a characteristic of the sharpness of the first radiation image and a characteristic of the sharpness of the second radiation image, and performs the sharpness conversion processing with the sharpness conversion filter.

Supplementary Note 3

The radiation image processing device according to Supplementary Note 1 or 2, in which the processor performs the sharpness conversion processing to match the sharpness of one of the first radiation image and the second radiation image with the sharpness of the other of the first radiation image and the second radiation image.

Supplementary Note 4

The radiation image processing device according to Supplementary Note 1 or 2, in which the processor performs the sharpness conversion processing to match the sharpness of the first radiation image and the sharpness of the second radiation image with specific sharpness.

Supplementary Note 5

The radiation image processing device according to any one of Supplementary Notes 1 to 4, in which the processor derives the component image by performing weighting subtraction on the first radiation image and the second radiation image which are subjected to the sharpness conversion processing.

Supplementary Note 6

The radiation image processing device according to Supplementary Note 5, in which the first radiation image and the second radiation image are acquired by one-shot energy subtraction imaging using two radiation detectors having characteristics in which sharpness in acquired radiation images is different.

Supplementary Note 7

A radiation image processing method comprising, via a computer, acquiring a first radiation image and a second radiation image which are acquired by imaging a subject, based on radiation having different energy distributions, performing sharpness conversion processing on at least one of the first radiation image or the second radiation image to make sharpness of the first radiation image and the second radiation image uniform, and deriving a component image in which a specific component in the subject is emphasized, based on the first radiation image and the second radiation image which are subjected to the sharpness conversion processing.

Supplementary Note 8

A radiation image processing program causing a computer to execute a procedure of acquiring a first radiation image and a second radiation image which are acquired by imaging a subject, based on radiation having different energy distributions, a procedure of performing sharpness conversion processing on at least one of the first radiation image or the second radiation image to make sharpness of the first radiation image and the second radiation image uniform, and a procedure of deriving a component image in which a specific component in the subject is emphasized, based on the first radiation image and the second radiation image which are subjected to the sharpness conversion processing.

Explanation of References

```
1: imaging apparatus
3: radiation source
5, 6: radiation detector
7: radiation energy conversion filter
10: radiation image processing device
11: CPU
12: radiation image processing program
13: storage
14: display
15: input device
16: memory
17: network I/F
18: bus
20: image acquisition unit
21: filter derivation unit
22: sharpness conversion unit
23: image derivation unit
G1: first radiation image
G2: second radiation image
G2': second radiation image subjected to processing
Gb: bone part image
Gs: soft part image
```

**Claims**

1. A radiation image processing device (10) comprising:

   at least one processor (11),
   wherein the processor is configured to:

   acquire (ST1) a first radiation image (G1) and a second radiation image (G2) which are acquired by imaging a subject (H), based on radiation having different energy distributions,
   perform (ST2) sharpness conversion processing on at least one of the first radiation image or the second radiation image to make sharpness of the first radiation image and the second radiation image uniform, and
   derive (ST3) a component image (Gb, Gs) in which a specific component in the subject is emphasized, based on the first radiation image and the second radiation image which are subjected to the sharpness conversion processing.

2. The radiation image processing device (10) according to claim 1,
   wherein the processor (11) is configured to:

derive a sharpness conversion filter (F0, B21) based on a difference between a characteristic (M1) of the sharpness of the first radiation image (G1) and a characteristic (M2) of the sharpness of the second radiation image (G2), and

perform the sharpness conversion processing with the sharpness conversion filter.

3. The radiation image processing device (10) according to claim 1 or 2,
wherein the processor (11) is configured to:
perform the sharpness conversion processing to match the sharpness of one of the first radiation image (G1) and the second radiation image (G2) with the sharpness of the other of the first radiation image and the second radiation image.

4. The radiation image processing device (10) according to claim 1 or 2,
wherein the processor (11) is configured to:
perform the sharpness conversion processing to match the sharpness of the first radiation image (G1) and the sharpness of the second radiation image (G2) with specific sharpness.

5. The radiation image processing device (10) according to any one of claims 1 to 4,
wherein the processor (11) is configured to:
derive the component image (Gb, Gs) by performing weighting subtraction on the first radiation image (G1) and the second radiation image (G2) which are subjected to the sharpness conversion processing.

6. The radiation image processing device (10) according to claim 5,
wherein the first radiation image (G1) and the second radiation image (G2) are acquired by one-shot energy subtraction imaging using two radiation detectors (5, 6) having characteristics (M1, M2) in which sharpness in acquired radiation images is different.

7. A radiation image processing method comprising:

via a computer (10),
acquiring (ST1) a first radiation image (G1) and a second radiation image (G2) which are acquired by imaging a subject (H), based on radiation having different energy distributions;
performing (ST2) sharpness conversion processing on at least one of the first radiation image or the second radiation image to make sharpness of the first radiation image and the second radiation image uniform; and
deriving (ST3) a component image (Gb, Gs) in which a specific component in the subject is emphasized, based on the first radiation image and the second radiation image which are subjected to the sharpness conversion processing.

8. A computer-readable storage medium (13) that stores a radiation image processing program (12) causing a computer (10) to execute:

a procedure of acquiring (ST1) a first radiation image (G1) and a second radiation image (G2) which are acquired by imaging a subject (H), based on radiation having different energy distributions;
a procedure of performing (ST2) sharpness conversion processing on at least one of the first radiation image or the second radiation image to make sharpness of the first radiation image and the second radiation image uniform; and
a procedure of deriving (ST3) a component image (Gb, Gs) in which a specific component in the subject is emphasized, based on the first radiation image and the second radiation image which are subjected to the sharpness conversion processing.

# FIG. 1

# FIG. 2

10

```
        11              16              17
       ┌─────────┐    ┌─────────┐    ┌─────────┐
       │   CPU   │    │ MEMORY  │    │ NETWORK │
       │         │    │         │    │   I/F   │    18
       └────┬────┘    └────┬────┘    └────┬────┘
────────────┼──────────────┼──────────────┼────────────
         ┌──┴──┐        ┌──┴──┐        ┌──┴──┐
─────────┘     └────────┘     └────────┘     └──────────
   ┌─────────────┐    ┌─────────┐    ┌──────────────┐
13 │   STORAGE   │    │ DISPLAY │    │ INPUT DEVICE │
   │ ┌─────────┐ │    └─────────┘    └──────────────┘
   │ │RADIATION│ │
   │ │  IMAGE  │ │
   │ │PROCESSING──12    14              15
   │ │ PROGRAM │ │
   │ └─────────┘ │
   └─────────────┘
```

# FIG. 3

```
┌─────────────────────────────────────┐
│       RADIATION IMAGE                │
│     PROCESSING DEVICE          ───10 │
│                                      │
│  ┌─────────────────────────────┐     │
│  │   IMAGE ACQUISITION UNIT    ──────20
│  └─────────────────────────────┘     │
│                                      │
│  ┌─────────────────────────────┐     │
│  │    FILTER DERIVATION UNIT   ──────21
│  └─────────────────────────────┘     │
│                                      │
│  ┌─────────────────────────────┐     │
│  │        SHARPNESS            │      │
│  │     CONVERSION UNIT        ───────22
│  └─────────────────────────────┘     │
│                                      │
│  ┌─────────────────────────────┐     │
│  │    IMAGE DERIVATION UNIT   ──────23
│  └─────────────────────────────┘     │
└─────────────────────────────────────┘
```

# FIG. 4

PIXEL VALUE

P1

PIXEL VALUE

P2

PIXEL VALUE

Ps

# FIG. 5

RESPONSE

M1

1.0

FREQUENCY

RESPONSE

M2

1.0

FREQUENCY

MAGNIFICATION

B12

1.0

FREQUENCY

# FIG. 6

```
            ┌─────────────┐
            │    START    │
            └─────────────┘
                   │
                   ▼
    ┌──────────────────────────────┐
    │    ACQUIRE FIRST AND SECOND   │─── ST1
    │        RADIATION IMAGES       │
    └──────────────────────────────┘
                   │
                   ▼
    ┌──────────────────────────────┐
    │     SHARPNESS CONVERSION      │─── ST2
    │          PROCESSING           │
    └──────────────────────────────┘
                   │
                   ▼
    ┌──────────────────────────────┐
    │    DERIVE COMPONENT IMAGE     │─── ST3
    └──────────────────────────────┘
                   │
                   ▼
            ┌─────────────┐
            │     END     │
            └─────────────┘
```

# FIG. 7

Europäisches
Patentamt

European
Patent Office

Office européen
des brevets

# EUROPEAN SEARCH REPORT

**Application Number**

EP 24 20 1162

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | WO 2020/144972 A1 (CANON KK [JP]) 16 July 2020 (2020-07-16) * paragraphs [0002] - [0005], [0012] * * paragraphs [0047], [0062] - [0072], [0077]; figures 7, 9-10 * | 1-8 | INV. G06T5/50 G06T5/73 |
| L | JP 2010 056396 A (FUJIFILM CORP) 11 March 2010 (2010-03-11) * paragraph [0004] * * incorporated into WO 2020/144972 by reference * | 5 | |

TECHNICAL FIELDS
SEARCHED (IPC)

G06T

The present search report has been drawn up for all claims

| Place of search | Date of completion of the search | Examiner |
|---|---|---|
| Munich | 12 February 2025 | Kollreider, Klaus |

CATEGORY OF CITED DOCUMENTS

X : particularly relevant if taken alone
Y : particularly relevant if combined with another
document of the same category
A : technological background
O : non-written disclosure
P : intermediate document

T : theory or principle underlying the invention
E : earlier patent document, but published on, or
after the filing date
D : document cited in the application
L : document cited for other reasons

& : member of the same patent family, corresponding
document

EPO FORM 1503 03.82 (P04C01)

## ANNEX TO THE EUROPEAN SEARCH REPORT
## ON EUROPEAN PATENT APPLICATION NO.

EP 24 20 1162

This annex lists the patent family members relating to the patent documents cited in the above-mentioned European search report.
The members are as contained in the European Patent Office EDP file on
The European Patent Office is in no way liable for these particulars which are merely given for the purpose of information.

12-02-2025

| Patent document cited in search report | Publication date | Patent family member(s) | | Publication date |
|---|---|---|---|---|
| WO 2020144972 A1 | 16-07-2020 | JP | 2020110264 A | 27-07-2020 |
|  |  | WO | 2020144972 A1 | 16-07-2020 |
| JP 2010056396 A | 11-03-2010 | JP | 2010056396 A | 11-03-2010 |
|  |  | US | 2010054418 A1 | 04-03-2010 |

EPO FORM P0459

For more details about this annex : see Official Journal of the European Patent Office, No. 12/82

**REFERENCES CITED IN THE DESCRIPTION**

**Patent documents cited in the description**

- JP 2002359781 A
- JP 2022026929 A